# EUROPÄISCHE PATENTSCHRIFT

(11) **EP 1 765 656 B1**
(45) Veröffentlichungstag und Bekanntmachung des Hinweises auf die Patenterteilung: **13.02.2008**
(21) Anmeldenummer: 05751722.9
(22) Anmeldetag: 14.06.2005
(51) Int. Cl.: B62D 5/083

(54) **DREHSCHIEBERVENTIL FÜR HYDRAULISCHE SERVOLENKUNG**
ROTARY VALVE FOR A HYDRAULIC POWER STEERING SYSTEM
SOUPAPE A TIROIR ROTATIF POUR SYSTEME DE DIRECTION ASSISTEE HYDRAULIQUE

(30) Priorität: 13.07.2004 DE 102004034026
(43) Veröffentlichungstag der Anmeldung: 28.03.2007
(73) Patentinhaber: ThyssenKrupp Presta SteerTec GmbH, 40476 Düsseldorf (DE)
(72) Erfinder: STEHLI, Thomas, 73631 Aichtal-Aich (DE); SCHIEK, Bernd, 73650 Winterbach (DE); SPEIDEL, Gerd, 73650 Winterbach (DE); KÖHLER, Karl-Hans, 73249 Wernau/N. (DE); OEDEKOVEN, Stefan, 51103 Köln (DE); REUTER, Jörg, 53844 Troisdorf (DE)
(74) Vertreter: Lenzing, Andreas
(86) Internationale Anmeldenummer: PCT/EP2005/006336
(87) Internationale Veröffentlichungsnummer: WO 2006/005403

(56) Entgegenhaltungen:
- CA-A1- 2 357 483
- US-A- 6 029 560

## Beschreibung

Die vorliegende Erfindung betrifft ein Drehschieberventil nach dem Oberbegriff des Anspruch 1.

Drehschieberventile für Hilfskraftlenkungen enthalten normalerweise zwei Ventilelemente, die koaxial ineinander beweglich angeordnet und zum Erzielen eines Steuerweges begrenzt zueinander verdrehbar angeordnet sind. Dabei ist ein erstes Ventilelement, das mit einem Ventil-Eingangsglied verbunden ist, als radial innenliegender Drehschieber ausgebildet. Ein zweites Ventilelement ist mit einem als Antriebsritzel ausgebildeten Ventil-Ausgangsglied drehfest verbunden und als radial außenliegende Steuerbuchse ausgebildet. Der Drehschieber ist zusätzlich über eine einen Steuerweg begrenzende Totgangkupplung mit dem Antriebsritzel verbunden. Beide Ventilelemente weisen Steuerlängsnuten auf, die wenigstens zu einem Teil in ihrer axialen Erstreckung begrenzt sind und zur Steuerung eines Druckmittels von oder zu Arbeitsräumen eines hydraulischen Stellaggregates bzw. Servomotors dienen. Zur Rückstellung der beiden Ventilelemente aus einer ausgelenkten Stellung in ihre Neutral- bzw. Mittenstellung dient eine Drehstabfeder. Derartige Drehschieberventile sind z.B. aus der DE 1227350, DE 4108597, DE 19921745, DE 19961017, DE 10146792 bekannt. Diese Drehschieberventile sind sowohl als "Open-Center"- als auch als "Closed-Center"-Ventile bekannt.

Für die Funktion des Drehschieberventils ist eine präzise Fertigung der Steuerkanten der Steuerlängsnuten unabdingbar. Durch entsprechende Gestaltung der Steuerkanten kann der Öffnungsquerschnitt des Drehschieberventils in Abhängigkeit des Verdrehwinkels zwischen Ventildrehschieber und Ventilbuchse vorgegeben werden. Zur Herstellung der Steuerkanten sind aufwendige und kostenintensive Fertigungsverfahren notwendig. Insbesondere die innenliegenden Längsnuten der Ventilbuchsen sind aufwendig und kostenintensiv in ihrer Herstellung.

Aufgabe der vorliegenden Erfindung ist es, ein Drehschieberventil bereitzustellen, welches einfacher in seiner Herstellung ist.

Diese Aufgabe wird erfindungsgemäß mit einem Drehschieberventil mit den Merkmalen des Anspruchs 1 gelöst. Weitere vorteilhafte Ausführungsformen ergeben sich durch die Merkmale der Unteransprüche.

Bei dem erfindungsgemäßen Drehschieberventil ermöglicht das Zusammenspiel von axial ausgerichteten und umlaufenden Nuten im Ventildrehschieber sowie radial verlaufenden Kanälen und außenliegenden umlaufenden Nuten in der Ventilbuchse vorteilhaft eine Vielzahl von Drosselquerschnitten über den Öffnungsbereich des Verdrehwinkelbereichs. Die radialen Kanäle der Ventilbuchse können dabei einen beliebig geformten Öffnungsquerschnitt aufweisen. Hierdurch kann die Form der Ventilkennlinie nahezu beliebig gestaltet und den Vorgaben sehr leicht angepasst werden. Die Öffnungsquerschnitte bzw. die Querschnitte der Kanäle können dabei z.B. einfach und kostengünstig erodiert oder geräumt werden. Andere Herstellungsverfahren der Kanäle sind selbstverständlich ebenso möglich. Auf besonders geformte und in der Herstellung komplizierte innenliegende Steuerkanten bei der Ventilbuchse kann vorteilhaft verzichtet werden.

Ferner ist die Ventilbuchse durch die gleichen Drücke in den geeignet zu wählenden Nuten der Ventilbuchse und des Ventildrehschiebers in radialer Richtung verschiebungsfrei gelagert. Dadurch wird vorteilhaft das für die Dichtwirkung des Ventils wichtige Radialspiel im Ausgangszustand bzw. in der Mittenstellung klein gehalten, da eine Reibungserhöhung durch den Spielausgleich ausgeschlossen ist. Das erfindungsgemäße Drehschieberventil ist ferner vorteilhaft einfach und kompakt in seinem Aufbau.

Aus Gründen der Energieeffizienz sollte das Drehschieberventil vorteilhaft als Ventil mit geschlossener Mitte ("Closed-center") ausgebildet werden. Zur weiteren Senkung des Energieverbrauchs kann dabei eine Hydraulikpumpe mit maximalem Druck und minimalem Fördervolumen zum Einsatz gelangen, wodurch die erforderliche Leistung im Gegensatz zur Permanentpumpe reduziert werden kann. Es ist selbstverständlich ebenso möglich, das erfindungsgemäße Drehschieberventil als Ventil mit geöffneter- Mitte auszugestalten. Hierzu sind die Kanäle in der Ventilbuchse, die radial umlaufenden Kanäle sowie die axialen Kanäle entsprechend anzuordnen und in ihrem Querschnitt auszugestalten.

Ähnlich wie bei bekannten Drehschieberventilen sind die umlaufenden äußeren Nuten der Ventilbuchse über Kanäle des Ventilgehäuses mit den Ventilanschlüssen verbunden, wobei die erfindungsgemäße Ventilbuchse ebenfalls radial verlaufende Kanäle aufweist. Die Ventilbuchse bekannter Drehschieberventile verfügt jedoch über zusätzliche axiale Nuten, welche an der Innenwandung der Ventilbuchse angeordnet und kompliziert in der Herstellung sind, da sie exakt mit den axialen Nuten und deren Steuerkanten der Ventildrehschieber zusammenarbeiten müssen. Auf dieses komplizierte Zusammenspiel der axialen Nuten von Ventildrehschieber und Ventilbuchse verzichtet das erfindungsgemäße Drehschieberventil, indem radial umlaufende Nuten und axial verlaufende Nuten im Ventildrehschieber angeordnet sind, welche im Zusammenspiel mit den Kanälen der Ventilbuchse die einzelnen Ventile des Drehschieberventils bilden. Die radial umlaufenden Nuten sind dabei durch mindestens einen Steg mindestens einmal unterbrochen, wobei die Stege bzw. Unterbrechungen in bestimmten Stellungen einen oder mehrere Kanäle der Ventilbuchse verschließen bzw. teilweise oder ganz öffnen. Die seitlichen Begrenzungen der axial verlaufenden Nuten des Ventildrehschiebers dienen ebenfalls zum Verschließen eines mit der axialen Nut korrespondierenden Kanals der Ventilbuchse.

Sofern das erfindungsgemäße Drehschieberventil als "Closed-Center"-Ventil ausgebildet ist, wird vorteilhaft der Innenraum der Ventilbuchse durch die Kontur am Ventildrehschieber insbesondere metallisch gegen den Arbeitsdruck am Ventileingang bzw. Zulauf abgedichtet. Die beiden Arbeitsraumanschlüsse des Drehschieberventils sind in dieser Stellung über einen weiteren Ventileingang mit dem Reservoir verbunden. Durch Verdrehen des Ventildrehschiebers wird der Zulaufquerschnitt bzw. Öffnungsquerschnitt sukzessive freigegeben, wodurch ein Volumenstrom zu fließen beginnt. Gleichzeitig wird der mit Druck zu beaufschlagende Arbeitsraumanschluss gegenüber dem Reservoir verschlossen, während der zweite Arbeitsraumanschluss weiterhin mit dem Reservoir verbunden bleibt.

Vorteilhaft kann das Drehschieberventil so ausgebildet sein, dass ein Teil des vom Zulauf kommenden Volumenstroms an dem Arbeitsraumanschluss vorbei direkt in das Reservoir zurückgeführt wird. Dabei wird der Volumenstrom über die zulauf- und reservoirseitigen Steuerkonturen in der Ventilbuchse und die axiale Nut im Ventildrehschieber entsprechend den Vorgaben gedrosselt, wodurch nahezu beliebige Drosselquerschnitte möglich sind und, wie bereits erläutert, die Form der Ventilkennlinie nahezu beliebig beeinflusst werden kann.

Nachfolgend wird anhand von Zeichnungen eine mögliche Ausführungsform beispielhaft erläutert.

Es zeigen:
- Fig. 1:: Eine schematische Darstellung einer hydraulisch unterstützten Lenkung;
- Fig. 2:: eine Draufsicht auf ein erfindungsgemäßes Drehschieberventil ohne Gehäuse;
- Fig. 3a und 3b:: Zwei perspektivische Ansichten des erfindungsgemäßen Ventildrehschiebers;
- Fig. 4a:: Querschnittsdarstellung durch den Schnitt A-A gem. Fig. 2 in der Mittenstellung;
- Fig. 4b:: vergrößerter Ausschnitt der Querschnittsdarstellung nach Fig. 4a;
- Fig. 4c:: vergrößerter Ausschnitt der Querschnittsdarstellung nach Fig. 4a in einer leicht verdrehten Stellung des Drehschieberventils;
- Fig. 5a:: Querschnittsdarstellung durch den Schnitt B-B gem. Fig. 2 in der Mittenstellung des Drehschieberventils;
- Fig. 5b:: vergrößerter Ausschnitt der Querschnittsdarstellung nach Fig. 5a;
- Fig. 5c:: vergrößerter Ausschnitt der Querschnittsdarstellung nach Fig. 5a in einer leicht verdrehten Stellung des Drehschieberventils;
- Fig. 6a u. 6b:: Ausschnittsdarstellungen des Schnitts D-D gem. Fig. 2 in einer leicht verdrehten Stellung des Drehschieberventils;
- Fig. 7a u. 7b:: Zusammenspiel zwischen axialer Nut des Ventildrehschiebers und des radialen Kanals der Ventilbuchse;
- Fig. 8:: Mögliche Querschnittsformen eines Kanals der Ventilbuchse.

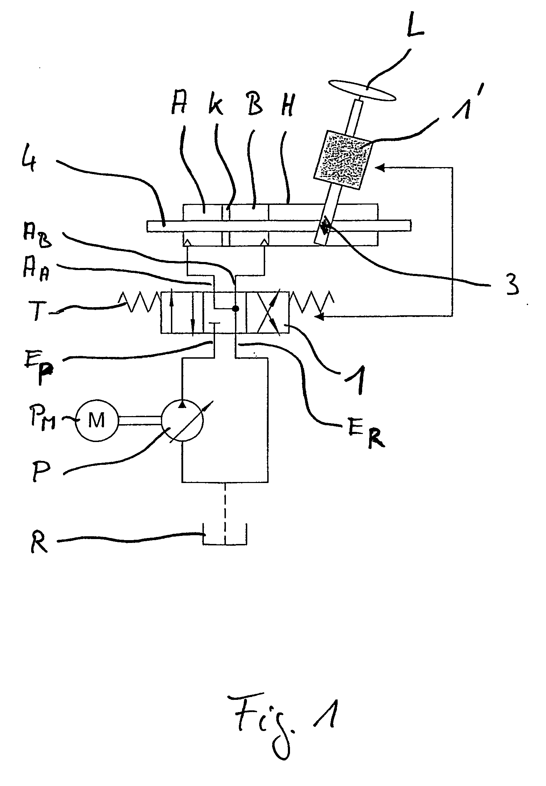

Die Figur 1 zeigt eine schematische Darstellung einer hydraulisch unterstützten Lenkung, eine Lenkhandhabe L aufweisend, wobei zwischen Ritzel 3 und Handhabe L das Drehschieberventil 1, 1' angeordnet sei. Die Zahnstange 4 ist wirkverbunden mit dem doppeltwirkenden zweiseitigen Kolbenstangenzylinder H, dessen Zylinder mittels des Kolbens K in zwei Arbeitsräume A und B unterteilt ist. Die Ausgänge A_{A} und A_{B} des Drehschieberventils 1 sind über Leitungen mit den Arbeitsräumen A und B verbunden. Das Drehschieberventil 1 ist aus schematischen Gründen als 4/3-Wege-Ventil dargestellt, welches vom Torsionsstab T im unbelasteten Zustand in die Mittenstellung gebracht wird. Aufgrund des Aufbaus des erfindungsgemäßen Drehschieberventils 1 ist es möglich, dass der Ventileingang E_{P} über ein im Drehschieberventil integriertes Drosselventil über den Ventileingang E_{R} mit dem Reservoir R verbunden ist, wobei dann gleichzeitig ein Ventilausgang mit dem Ventileingang E_{P} und der andere mit dem Reservoir verbunden ist.

Das in Figur 1 dargestellte Drehschieberventil 1 ist als "Closed-Center"-Ventil ausgebildet, wobei die Hydraulikpumpe P von einem Motor P_{M} angetrieben ist, welche mit maximalem Druck und minimalem Fördervolumen betrieben werden kann.

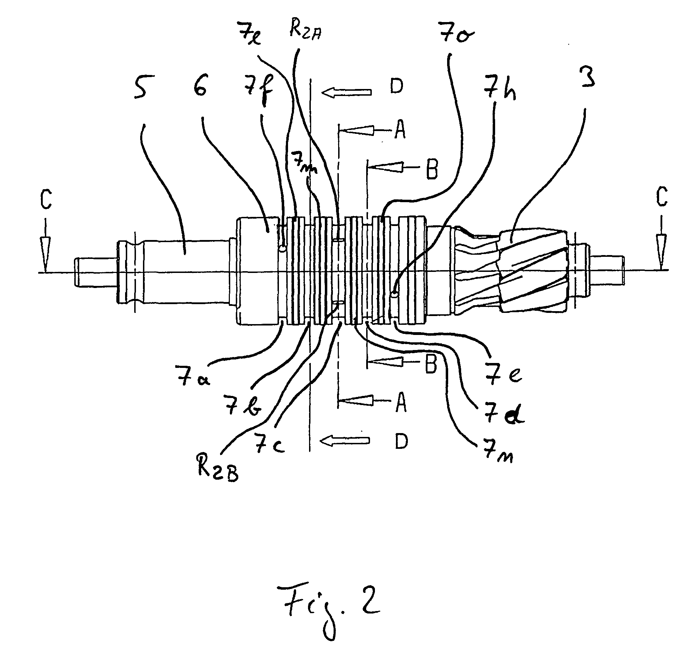

Die Figur 2 zeigt eine Draufsicht auf ein erfindungsgemäßes Drehschieberventil ohne das umschließende Gehäuse. Die im Gehäuse angeordneten Ventileinlässe und Ventilauslässe sind mit den äußeren, radial umlaufenden Nuten 7a-7e der Ventilbuchse 6 verbunden. Die Nuten 7a-7e sind dabei über die zwischen ihnen angeordneten umlaufenden Stege 7l, 7m, 7n und 7o voneinander getrennt. Dabei ist die Nut 7a mit dem einen Arbeitsraum und die Nut 7e mit dem anderen Arbeitsraum des doppeltwirkenden Kolbenstangenzylinders über im Gehäuse befindliche Kanäle und äußere Zuleitungen verbunden. Die Nuten 7b und 7d sind über das Ventilgehäuse mit dem Ventileingang E_{P} verbunden, an den die Druckseite der Hydraulikpumpe P angeschlossen ist. Die mittlere Nut 7c ist mit dem Ventileingang E_{R} verbunden, an den das Reservoir angeschlossen ist. Die Ventilbuchse 6 umschließt den Ventildrehschieber 5 abdichtend, wobei der Innenraum der Ventilbuchse 6 über die in der Ventilbuchse 6 im Bereich der Nuten 7a-7e angeordneten Kanäle verbunden ist. In den äußeren Wandungen der Stege 7l, 7m, 7n und 7o können zur Abdichtung gegenüber der Gehäuseinnenwandung ringförmige Dichtungen angeordnet werden.

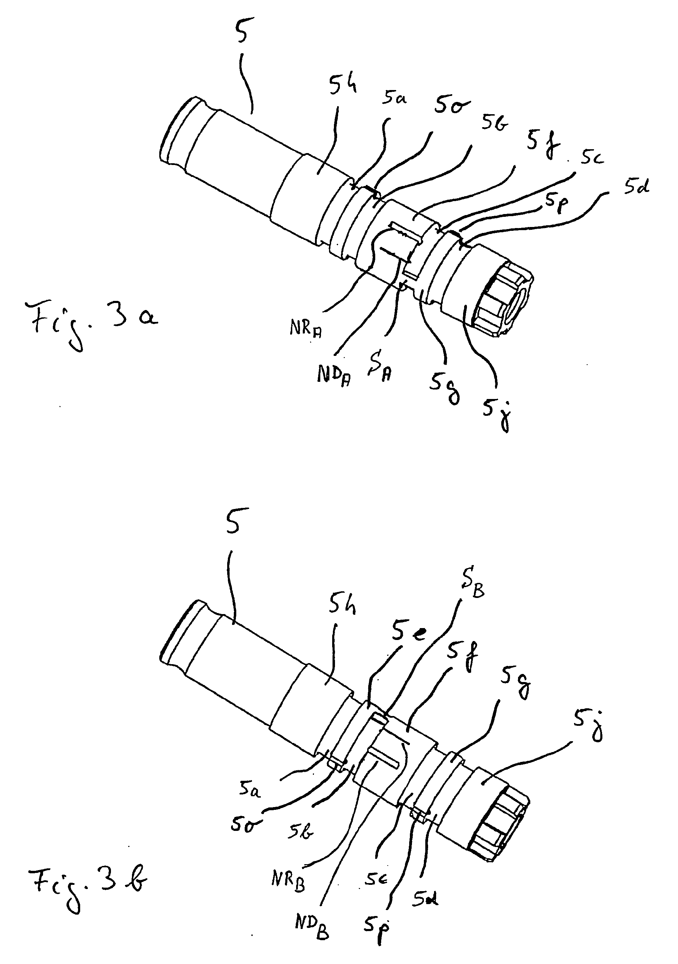

Die Figuren 3a und 3b zeigen perspektivische Ansichten des erfindungsgemäßen Ventildrehschiebers 5 aus unterschiedlichen Richtungen, damit die einzelnen Stege S_{A}, S_{B} sowie Nuten NR_{A}, ND_{A} sowie NR_{B}, ND_{B} zu erkennen sind. Der Ventildrehschieber 5 weist vier radial umlaufende Nuten 5a-5d auf, welche über die Kanäle der Ventilbuchse 7 mit den äußeren umlaufenden Nuten 7a-7e der Ventilbuchse korrespondieren. Die Nuten 5a-5d sind axial seitlich durch die Stege 5h, 5e, 5f, 5g und 5j begrenzt, wobei die radialen äußeren Wandungen dieser Stege metallisch gegenüber der Innenwandung der Ventilbuchse 6 abdichten.

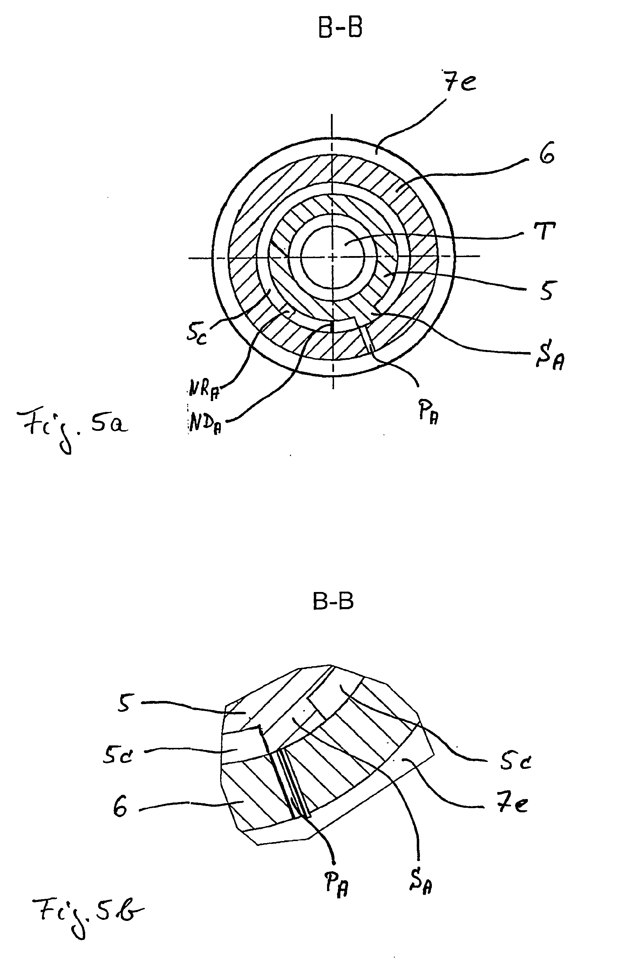

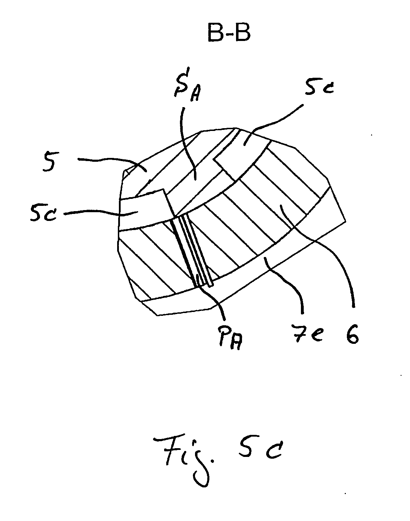

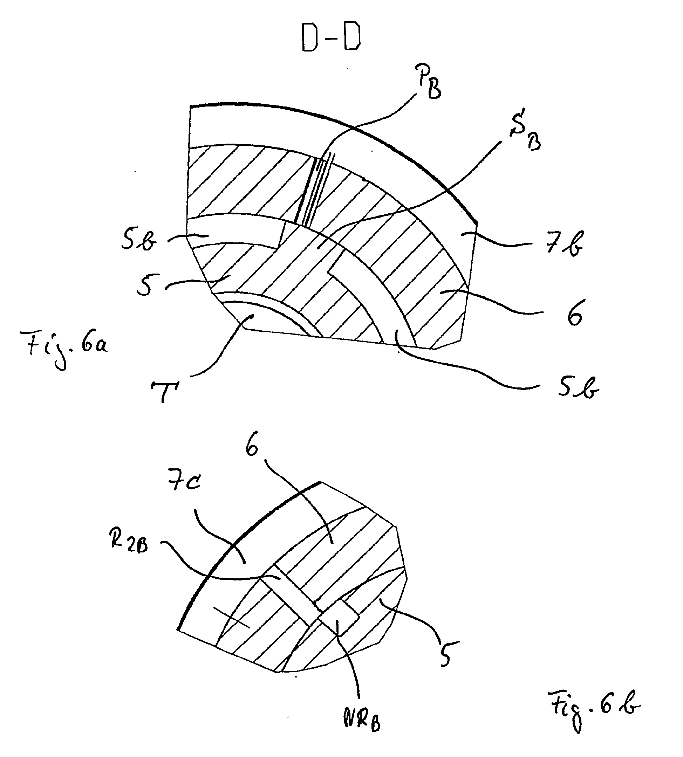

Die Nuten 5a und 5b sind über einen Durchbruch 5o des Steges 5e ständig miteinander verbunden. Die Nut 5b weist ferner einen axialen Steg S_{B} auf, welcher wahlweise einen Kanal P_{B} (s. Fig. 3a, 3b und 6a) öffnet oder verschließt. Ebenfalls sind die Nuten 5c und 5d über einen Durchbruch 5p des Steges 5g ständig miteinander verbunden. Die Nut 5c weist ebenso wie die Nut 5b einen axialen Steg S_{A} auf, welcher wahlweise einen Kanal P_{A} (s. Fig. 5a, 5b und 5c) öffnet oder verschließt. Beide axiale Steg S_{A} und S_{B} sind dabei so angeordnet, dass sie in der Mittenstellung den korrespondierenden Kanal P_{A} bzw. P_{B} der Ventilbuchse 6 verschließen. Die Breite der axialen Stege S_{A} und S_{B} ist so bemessen, dass für alle Verdrehwinkel immer mindestens genau ein Kanal P_{A} oder P_{B} verschlossen ist. Selbstverständlich müssen die axialen Stege die radial umlaufenden Nuten nicht vollständig unterbrechen. Der Steg S_{A}, S_{B} muss lediglich von seiner Querschnittsfläche so bemessen sein, dass er den Kanal für die erforderlichen Verdrehwinkelbereiche vollständig verschließt bzw. öffnet.

Der mittlere Steg 5f weist zwei Gruppen von jeweils zwei sich in axialer Richtung erstreckende Nuten NR_{A}, ND_{A} und NR_{B}, ND_{B} auf, wobei die axialen Nuten NR_{A}, ND_{A} ein Gruppe bilden, welche von der Nut 5c ausgehend sich in axialer Richtung in den Steg 5f hinein erstrecken. Die axialen Nuten NR_{B}, ND_{B} bilden die zweite Gruppe und erstrecken sich ausgehend von der Nut 5b in axialer Richtung in den Steg 5f hinein. Alle axialen Nuten NR_{A}, ND_{A} und NR_{B}, ND_{B} enden im Bereich des Steges 5f und sind somit nur einseitig geöffnet. Sie bilden zusammen mit den ihnen zugeordneten Kanäle R_{1A}, R_{2A}, R_{1B} und R_{2B} Ventile, über die je nach Stellung von Ventilbuchse 6 zur Ventildrehschieber 5 die Nut 7c der Ventilbuchse 7 mit der Nut 5b bzw. 5c verbunden ist. Die axialen Nuten NR_{A}, ND_{A} und NR_{B}, ND_{B} sowie die axialen Stege S_{A}, S_{B} sind prinzipiell beliebig über den Umfang des Ventildrehschiebers 5 anordbar, wobei selbstverständlich die korrespondierenden Kanäle ebenfalls entsprechend in der Ventilbuchse 6 angeordnet werden müssen.

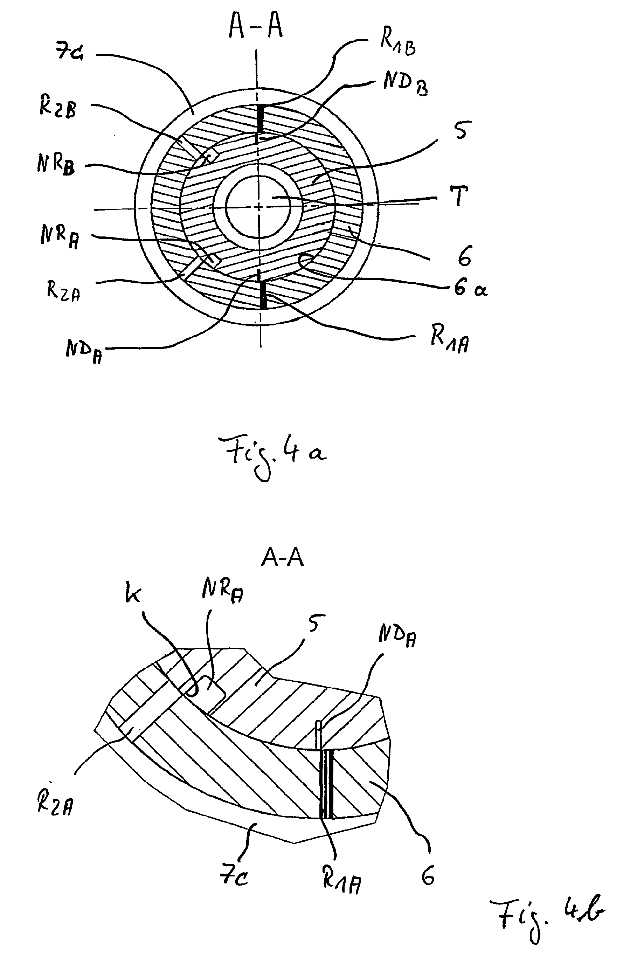

Die Figuren 4a bis 4c, 5a bis 5c, sowie 6a und 6b zeigen die Schnitte A-A, B-B und D-D des Ventildrehschiebers gem. Fig. 2 sowohl in der Mittenstellung als auch in verdrehten Stellungen. In der Tabelle 1 sind als Übersicht die jeweiligen Ventilstellungen in Abhängigkeit der Winkelstellung ϕ von Ventildrehschieber 5 und Ventilbuchse 6 wiedergegeben.

Die Figuren 4a und 4b zeigen das Drehschieberventil in seiner Mittenstellung, die durch den entlasteten Torsionsstab T definiert ist. Die relative Positionierung und Fixierung der Ventilbuchse 6 und dem Ventildrehschieber 5 zueinander ist hinlänglich bekannt und kann auch für das erfindungsgemäße Drehschieberventil angewendet werden.

In der Mittenstellung sind die beiden Ventile NR_{A}-R_{2A} und NR_{B}-R_{2B} geöffnet (Fig. 4a, 4b). Die Fig. 4b zeigt eine Ausschnittsvergrößerung des Schnittes A-A für die Mittenstellung des Drehschieberventils. Die axiale Nut NR_{A} überlappt in der Mittenstellung leicht mit dem Kanal R_{2A}. Gleiches gilt für die Nut NR_{B} und den Kanal R_{2B}, wodurch beide Ventile in der Mittenstellung geöffnet sind. Wie in den Figuren 5a und 5b für das Ventil S_{A}-P_{A} dargestellt, ist dieses Ventil in der Mittenstellung geschlossen. Gleiches gilt in der Mittenstellung für das Ventil S_{B}-P_{B}, so dass die beiden Ventilausgänge über die miteinander über die Durchlässe 5o und 5p verbundenen Nuten 5a,5b bzw. 5c, 5d sowie der axialen Nuten NR_{A} und NR_{B} mit der umlaufenden Nut 7c und somit mit dem Ventileingang E_{R} und dem Reservoir verbunden sind. Die Arbeitsräume des Hydraulikaggregates sind somit in der Mittenstellung drucklos und über das Drehschieberventil miteinander verbunden, so dass keine Lenkunterstützung erfolgt. Die Nut ND_{A} und der zugehörige Kanal R_{1A} sowie die Nut ND_{B} und der zugehörige Kanal R_{1B} überlappen sich nicht, d.h. die zylindrische Außenwandung des Steges 5f verschließt metallisch abdichtend die Kanäle R_{1A} und R_{1B}.

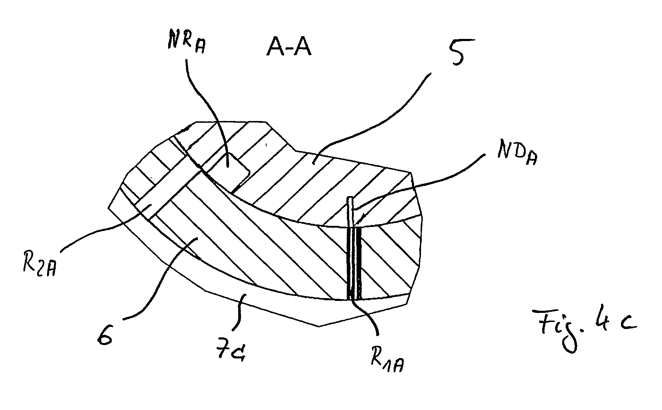

Sobald das Drehschieberventil aus seiner Mittenstellung heraus in eine Richtung verdreht wird (Fig. 4c, 5c, 6a und 6b) schließt das Ventil NR_{A}-R_{2A} und das Ventil ND_{A}-R₁A öffnet. Gleichzeitig öffnet auch das Ventil S_{A}-P_{A} (Fig. 5c), wodurch die Nut 5c mit der Druckseite der Hydraulikpumpe P verbunden ist. Die Ventile S_{B}-P_{B} und ND_{B}-R_{1B} bleiben weiterhin verschlossen, wohingegen das Ventil NR_{B}-R_{2B} weiter öffnet. Der Volumenstrom strömt nun über P_{A} in die Nut 5c, von wo aus er über den Durchlass 5p in die Nut 5d und durch den Kanal 7h (Fig. 2) in die Nut 7e der Ventilbuchse und zum Ventilausgang hin in den Arbeitsraum A strömt. Ein Teil des Volumenstroms gelangt über die axiale Nut ND_{A} und den Kanal R_{1A} zurück in das Reservoir. Das Ventil ND_{A}-R_{1A} dient somit als Drosselventil, über das die Ventilkennlinie beeinflusst werden kann. Sofern das Drehschieberventil in die andere Richtung verdreht wird, öffnen bzw. schließen die Ventile analog.

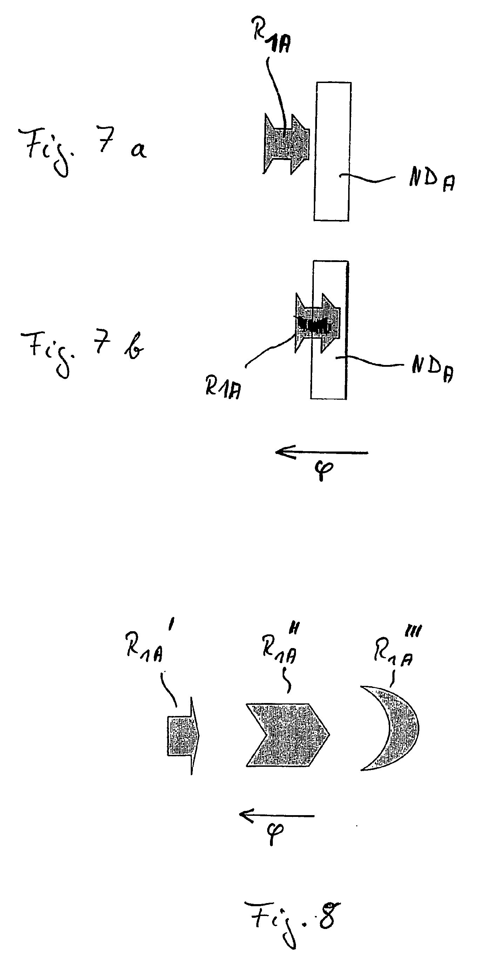

Die Figuren 7a und 7b zeigen beispielhaft das Zusammenspiel zwischen axialer Nut ND_{A} des Ventildrehschiebers 5 und des radialen Kanals R_{1A} der Ventilbuchse6. Die Figur 7a zeigt das Ventil in der Mittenstellung, wohingegen die Figur 7b das Ventil in verdrehter Stellung zeigt. Der Öffnungsquerschnitt des Kanals R_{1A} kann prinzipiell beliebig ausgestaltet sein, so dass sich der Öffnungsquerschnitt des Ventils ND_{A}-R_{1A} über den Verdrehwinkel ϕ verändert. Der Öffnungsquerschnitt ist dabei an die gewünschte Ventilkennlinie anzupassen. Der Kanal R_{1A} sowie die anderen Kanäle der Ventilbuchse können dabei mit den verschiedensten Herstellungsverfahren erzeugt werden.

Die Figur 8 zeigt mögliche Öffnungsquerschnitte eines Kanals R_{1A}', R₁ₐ" bzw. R_{1A}''' der Ventilbuchse 6.

Es ist selbstverständlich ebenso im Sinne der Erfindung, wenn die Anzahl der Kanäle und Nuten von der oben exemplarisch erläuterten Ausführungsform abweicht. Auch deren Anordnung kann vertauscht werden. Ferner ist es auch möglich, auf die Durchbrüche der Stege zur Verbindung der Nuten 5a, 5b bzw. 5c, 5d zu verzichten, in dem entsprechende Kanäle in der Ventilbuchse angeordnet werden. So ist es zum Beispiel auch möglich, den Durchbruch durch eine durch den Ventildrehschieber verlaufenden innenliegenden Kanal, z.B. in Form einer Durchgangsbohrung zu ersetzen. Auch müssen die axialen Kanäle nicht genau axial verlaufen, sondern können auch windschief zur Achse angeordnet werden. Sie müssen ferner nicht zwingend einen geraden Verlauf aufweisen.

**Tabelle 1**

| **Winkelstellung ϕ** | **Nuten (verbunden mit)** | | | | **Ventile** | | | | | | **Ausgänge** | |
|---|---|---|---|---|---|---|---|---|---|---|---|---|
| | **NR_{A}** | **ND_{A}** | **NR_{B}** | **ND_{B}** | **S_{A}-P_{A}** | **NR_{A}-R_{2A}** | **ND_{A}-R_{1A}** | **S_{B}-P_{A}** | **NR_{B}-R₂₈** | **ND_{B}-R_{1B}** | **A** | **B** |
| Mittenstellung | Reservoir | Reservoir | Reservoir | Reservoir | geschlossen | leicht geöffnet | geschlossen | geschlossen | leicht geöffnet | geschlossen | mit R verbunden | mit R verbunden |
| ϕ in Plus-Richtung (verdrehen des Drehschiebers nach rechts) | Pumpe | Pumpe | Reservoir | Reservoir | öffnet | schließt | öffnet | geschlossen | öffnet ganz | geschlossen | mit P verbunden | mit R verbunden |
| ϕ in Minus-Richtung (verdrehen des Drehschiebers nach links) | Reservoir | Reservoir | Pumpe | Pumpe | geschlossen | öffnet ganz | geschlossen | öffnet | schließt | öffnet | mit R verbunden | mit P verbunden |

## Patentansprüche

1. Drehschieberventil (**1**) für eine hydraulische Servolenkung von Kraftfahrzeugen, umfassend
eine rohrförmige Ventilbuchse (**6**), die mit mindestens einem lenkbaren Rad eines Kraftfahrzeugs verbunden ist,
einen zylindrischen Ventildrehschieber (**5**) innerhalb der Ventilbuchse (**6**), der mit einem Lenkrad (**L**) des Kraftfahrzeugs verbunden und relativ zur Ventilbuchse aus einer Mittenstellung heraus verdrehbar ist,
Fluidströmungswege, welche einen druckseitigen Eingang (**E_{P}**) wahlweise mit einem von zwei Ventilausgängen (**A_{A}, A_{B}**) verbinden,
einen Torsionsstab (**T**), der im Ventildrehschieber (**5**) angeordnet ist,
wobei die Ventilbuchse (**6**) an ihrer Außenseite mehrere radial umlaufende Nuten (**7a-7e**) hat, welche mittels umlaufender Stege (**7ₗ-7ₒ**) voneinander beabstandet sind, und dass die Nuten (**7a-7e**) unmittelbar oder mittels umlaufender Dichtungen an der Innenwandung einer hülsenförmigen Gehäuseinnenwandung abdichtend anliegen, wobei im Bereich der Nuten (**7a-7e**) im Gehäuse befindliche Kanäle enden, welche die Nuten (**7a-7e**) mit den Arbeitsräumen eines Kolben-Zylinderaggregates (**A, B**), einem Reservoir (**R**) bzw. einer Pumpe (**P**) verbinden, und
dass in der Ventilbuchse (**6**) insbesondere radial verlaufende Kanäle angeordnet sind, welche sich ausgehend von den Nuten (**7a-7e**) der Ventilbuchse (**6**) hin zur Innenwandung (**6a**) der Ventilbuchse (**6**) erstrecken und diese durchtreten, und
**dadurch gekennzeichnet, dass**
der Ventildrehschieber (**5**) an seiner Außenseite mehrere radial umlaufende Nuten (**5a-5d**) hat, welche mittels umlaufender Stege (**5e-5g**) voneinander beabstandet sind, wobei die Stege (**5e-5g**) an der Innenwandung (**6a**) der Ventilbuchse (**6**) anliegen, und
dass in mindestens einem Steg (**5f**) des Ventildrehschiebers (**5**) mindestens eine sich in axialer Richtung erstreckende Nut (**NR_{A}, ND_{A}, NR_{B}, ND_{B}**) angeordnet ist, welche sich von einer vom Steg (**5f**) begrenzten radial umlaufenden Nut (**5b, 5c**) aus erstreckt, wobei je nach Stellung von Ventilbuchse (**5**) und Ventildrehschieber **(6)** zueinander ein der Nut (**NR_{A}, ND_{A}, NR_{B}, ND_{B}**) zugehöriger Kanal (**R_{1A}, R_{2A}, R_{1B}, R_{2B}**) der Ventilbuchse (**6**) von dem Steg (**5f**) verschlossen oder mit der sich in axialer Richtung erstreckenden Nut (**NR_{A}, ND_{A}, NR_{B}, ND_{B}**) verbunden ist, und
dass in mindestens einer radial umlaufenden Nut (**5b, 5c**) des Ventildrehschiebers (**5**) ein die umlaufende Nut (**5b, 5c**) unterbrechender axialer Steg (**S_{A}**, **S_{B}**) angeordnet ist, wobei je nach Stellung von Ventilbuchse (**5**) und Ventildrehschieber (**6**) zueinander ein dem Steg (**S_{A}, S_{B}**) zugeordneter Kanal (**P_{A}, P_{B}**) der Ventilbuchse (**6**) von dem axialen Steg (**S_{A}**, **S_{B}**) verschlossen oder mit der unterbrochenen umlaufenden Nut (**5b**, **5c**) verbunden ist.

2. Drehschieberventil nach Anspruch 1, **dadurch gekennzeichnet, dass** der axiale Steg (**S_{A}, S_{B}**) in der durch den Torsionsstab (**T**) definierten Mittenstellung einen Kanal (**P_{A}, P_{B}**) der Ventilbuchse (**6**) gegenüber der umlaufenden Nut (**5b, 5c**) des Ventildrehschiebers (**5**) verschließt und bei Auslenkung aus der Mittenstellung einen Öffnungsquerschnitt zwischen der Nut (**5b, 5c**) und dem Kanal (**P_{A}, P_{B}**) öffnet, und somit insbesondere in der Mittenstellung die Abdichtung der Nut (**5b, 5c**) zum Druckanschluss bewirkt.

3. Drehschieberventil nach Anspruch 1 oder 2, **dadurch gekennzeichnet, dass** die Ventilbuchse (**6**) fünf radial umlaufende Nuten (**7a-7e**) hat, wobei die mittlere Nut (**7c**) über mindestens einen Kanal mit einem Ventileingang (**E_{R}**) in Verbindung ist, und dass die beiden zur mittleren Nut (**7c**) unmittelbar benachbarten Nuten (**7b, 7d**) mit einem anderen Ventileingang (**E_{P}**) in Verbindung sind, und dass die beiden äußeren Nuten (**7a, 7f**) jeweils mit einem Ventilausgang (**A_{A}, A_{B}**) in Verbindung sind.

4. Drehschieberventil nach Anspruch 3, **dadurch gekennzeichnet, dass** die mittlere Nut (**7c**) der Ventilbuchse (**6**) mit dem Ventileingang (**E_{R}**) verbunden ist, welcher mit einem Reservoir (**R**) verbunden ist, und dass der andere Ventileingang (**E_{P}**) mit der Druckseite einer Pumpe (**P**) verbunden ist.

5. Drehschieberventil nach einem der Ansprüche 1 bis 4, **dadurch gekennzeichnet, dass** der Ventildrehschieber (**5**) vier radial umlaufende Nuten (**5a-5d**) hat, wobei die jeweils äußeren beiden Nuten (**5a, 5d**) mittels eines schmalen Steges (**5e**, **5g**) und die beiden mittleren Nuten (**5b**, **5c**) mittels eines breiten Steges (**5f**) zueinander beabstandet sind.

6. Drehschieberventil nach Anspruch 5, **dadurch gekennzeichnet, dass** jeweils die beiden äußeren radial umlaufenden Stege (**5e, 5g**) einen Durchbruch (**5o, 5p**), insbesondere in Form einer axialen Nut, aufweisen, durch den die durch den Steg (**5e, 5g**) beabstandeten radial umlaufenden Nuten (**5a, 5b; 5c, 5d**) miteinander in Verbindung sind.

7. Drehschieberventil nach Anspruch 5 oder 6, **dadurch gekennzeichnet, dass** der mittlere Steg (5f) des Ventildrehschiebers (**5**) zwei Gruppen sich in axialer Richtung erstreckende Nuten (**NR_{A}, ND_{A}; NR_{B}, ND_{B}**) aufweist, wobei jede Gruppe mindestens zwei Nuten umfasst, und jede Gruppe von Nuten (**NR_{A}, ND_{A}; NR_{B}, ND_{B}**) von einer der an den Steg (**5f**) angrenzenden radial umlaufenden Nuten (**5b, 5c**) ausgeht und sich alle Nuten (**NR_{A}, ND_{A}; NR_{B}, ND_{B}**) zumindest bis in den Bereich unterhalb der mittleren Nut (**7c**) der Ventilbuchse (**6**) erstrecken, wobei jede axiale Nut (**NR_{A}, ND_{A}; NR_{B}, ND_{B}**) mit jeweils einem ihr zugeordneten Kanal (**R_{1A}, R_{2A}; R_{1B}, R_{2B}**) der Ventilbuchse (**6**) jeweils ein Ventil (**ND_{A}-R_{1A}; NR_{A}-R_{2A}; ND_{B}-R_{1B}; NR_{B}-R_{2B}**) bildet, wobei die mittlere Nut (**7c**) der Ventilbuchse (**6**) in Abhängigkeit der Stellung von Ventilbuchse (**6**) und Ventildrehschieber (**5**) zueinander über die Kanäle (**R_{1A/} R_{2A}; R_{1B}, R_{2B}**) der Ventilbuchse (**6**) mit einer oder mehreren axialen Nuten (**NR_{A}, ND_{A}; NR_{B}, ND_{B}**) in Verbindung bringbar ist.

8. Drehschieberventil nach Anspruch 7, **dadurch gekennzeichnet, dass** jede Gruppe von axialen Nuten (**NR_{A}, ND_{A}; NR_{B}, ND_{B}**) genau zwei Nuten umfasst.

9. Drehschieberventil nach Anspruch 7 oder 8, **dadurch gekennzeichnet, dass jede** Gruppe von axialen Nuten (**NR_{A}, ND_{A}; NR_{B}, ND_{B}**) eine Nut mit einem kleinen und eine Nut mit einem größeren Nutquerschnitt hat.

10. Drehschieberventil nach Anspruch 9, **dadurch gekennzeichnet, dass** die Nut (**ND_{A}; ND_{B}**) mit dem kleinen Nutquerschnitt zusammen mit dem Steg (**5f**) und dem zugehörigen Kanal (**R_{1A}; R_{1B}**) der Ventilbuchse (**6**) ein Drosselventil bildet, welches die Druckseite der Pumpe (**P**) bei Auslenkung des Drehschieberventils (**1**) aus der Mittenstellung heraus mit dem Reservoir (**R**) verbindet.

11. Drehschieberventil nach einem der vorhergehenden Ansprüche, **dadurch gekennzeichnet, dass** der Ventildrehschieber (**5**) vier radial umlaufende Nuten (**5a-5d**) hat, wobei die mittleren Nuten (**5b**, **5c**) mindestens einen sich über den gesamten Querschnitt jeder Nut (**5b, 5c**) erstreckenden axialen Steg (**S_{A}, S_{B}**) aufweisen.

12. Drehschieberventil nach einem der vorhergehenden Ansprüche, **dadurch gekennzeichnet, dass** die in axialer Richtung verlaufenden Kanten (**K**) der axialen Nuten (**NR_{A}, ND_{A}; NR_{B}, ND_{B}**) Steuerkanten bilden.

13. Drehschieberventil nach einem der vorhergehenden Ansprüche, **dadurch gekennzeichnet, dass** der Ventildrehschieber (**5**) vier am Umfang axial verlaufende Nuten (**NR_{A}, ND_{A}; NR_{B}, ND_{B}**) und die Ventilbuchse (**6**) fünf radial umlaufende Nuten (**7a-7e**) aufweist, wobei die Nuten jeweils durch radial umlaufende Stege (**5e-5g bzw. 7ₗ-7ₒ**) voneinander beabstandet sind, wobei die jeweils äußeren zwei Nuten (**7a, 7b, 7d, 7e**) der Ventilbuchse (**6**) radial über den Nuten (**5a, 5b, 5c, 5d**) des Ventildrehschiebers (**5**) angeordnet sind, und dass zwischen den beiden mittleren Nuten (**5b, 5c**) des Ventildrehschiebers (**5**) ein Steg (**5f**) angeordnet ist, der sich axial über den Bereich der mittleren Nut (**7c**) der Ventilbuchse (**6**) erstreckt.

14. Drehschieberventil nach einem der vorherigen Ansprüche, **dadurch gekennzeichnet, dass** das Drehschieberventil (**1**) ein Ventil mit "geschlossener Mitte" ist, wobei in der durch den Torsionsstab (**T**) definierten Mittenstellung
a) die beiden axialen Stege (**S_{A}, S_{B}**) der beiden mittleren Nuten (**5b, 5c**) des Ventildrehschiebers (**5**) die über die Nuten (7**b, 7d**) der Ventilbuchse (**6**) mit der Pumpe (**P**) verbundenen Kanäle (**P_{A}, P_{B}**) der Ventilbuchse (**6**) verschließen, und
b) jeweils zwei axiale Nuten (**NR_{A}, NR_{B}**) mit den zugeordneten Kanälen (**R_{2A}, R_{2B}**) der Ventilbuchse (**6**) derart überlappen, dass durch die Kanäle (**R_{2A}, R_{2B}**) und die axialen Nuten (**NR_{A}, NR_{B}**) beide Ventilausgänge (**A_{A}, A_{B}**) mit dem Reservoir (**R**) verbunden sind,
und dass bei Auslenkung aus der definierten Mittenstellung
c) einer der beiden axialen Stege (**S_{A}, S_{B}**) den zugeordneten Kanal (**P_{A}, P_{B}**) der Ventilbuchse (**6**) weiterhin verschließt und der andere axiale Steg (**S_{A}, S_{B}**) den ihm zugeordneten Kanal (**P_{A}, P_{B}**) freigibt, derart, dass die vom axialen Steg (**S_{A}, S_{B}**) unterbrochene Nut (**5b, 5c**) mit dem Kanal (**P_{A}, P_{B}**) verbunden ist, und dass
d) ein durch eine weitere axiale Nut (**ND_{A}, ND_{B}**) und einen zugeordneten Kanal (**R_{1A}, R_{1B}**) der Ventilbuchse (**6**) gebildetes Ventil (**ND_{A}-R_{1A}; ND_{B}-R_{1B}**) öffnet und diejenige vom axialen Steg (**S_{A}, S_{B}**) unterbrochenen Nut (**5b, 5c**)**,** welche mit der Pumpe (**P**) verbunden ist, zusätzlich über die weitere axiale Nut (**ND_{A}, ND_{B}**) mit dem Reservoir (**R**) verbindet.

15. Drehschieberventil nach einem der vorhergehenden Ansprüche, **dadurch gekennzeichnet, dass** mindestens ein Kanal (**R_{1A}, R_{2A}; R_{1B}, R_{2B}, P_{A}, P_{B}**) der Ventilbuchse (**6**) einen von einer Kreisform abweichenden Öffnungsquerschnitt aufweist.

16. Drehschieberventil nach einem der vorhergehenden Ansprüche, **dadurch gekennzeichnet, dass** die Querschnittsform mindestens eines Kanals (**R_{1A}, R_{2A}; R_{1B}, R_{2B}, P_{A}, P_{B}**) der Ventilbuchse (**6**) an den erforderlichen Öffnungsquerschnitt bei entsprechender Auslenkung zwischen Ventildrehschieber (**5**) und Ventilbuchse (**6**) für das jeweiligen Ventil des Drehschieberventils (**1**) angepasst ist.

17. Drehschieberventil nach einem der vorhergehenden Ansprüche, **dadurch gekennzeichnet, dass** mittels des Öffnungsquerschnitts eines Kanals (**R_{1A}, R_{2A}; R_{1B}, R_{2B}, P_{A}, P_{B}**) der Ventilbuchse (**6**) die Durchflußmenge in Abhängigkeit des Verdrehwinkels zwischen Ventilbuchse (**5**) und Ventildrehschieber (**6**) vorgebbar ist.

18. Drehschieberventil nach einem der vorhergehenden Ansprüche, **dadurch gekennzeichnet, dass** die Nuten der Ventilbuchse und des Ventildrehschiebers in radialer Richtung übereinander angeordnet sind.

19. Drehschieberventil nach einem der vorhergehenden Ansprüche, **dadurch gekennzeichnet, dass** der axiale Steg (**S_{A}, S_{B}**) mit seiner einen Kante (**Kₛ**) eine Steuerkante bildet.

20. Drehschieberventil nach einem der vorhergehenden Ansprüche, **dadurch gekennzeichnet, dass** die radial umlaufenden Nuten Ringnuten sind.

21. Drehschieberventil nach einem der Ansprüche 1 bis 19, **dadurch gekennzeichnet, dass** die radial umlaufenden Nuten sich nur um einen Teil des Umfangs erstrecken und durch mindestens einen axialen Steg in Umfangsrichtung begrenzt sind.

22. Drehschieberventil nach einem der Ansprüche 1 bis 19, **dadurch gekennzeichnet, dass** die radial umlaufenden Nuten durch mindestens einen axialen Steg in Umfangsrichtung unterbrochen bzw. aufgeteilt sind.

## Claims

1. Rotary slide valve (**1**) for a hydraulic servo steering mechanism in motor vehicles, said valve comprising:
a tubular valve bush (**6**) which is connected to at least one steerable wheel of a motor vehicle;
a cylindrical valve-rotating slide (**5**) inside the valve bush (**6**), which slide is connected to a steering wheel (**L**) belonging to the vehicle and can be twisted, relative to the valve bush, out of a central position;
fluid flow paths which selectively connect an inlet (**E_{P}**) on the pressure side to one of two valve outlets (**A_{A}, A_{B}**); and
a torsion bar (**T**) which is disposed within the valve-rotating slide (**5**);
wherein the valve bush (**6**) has, on its outer side, a number of radially circumferential grooves (**7a-7e**) which are spaced apart from one another by means of circumferential walls (**7ₗ-7ₒ**) and that said grooves (**7a-7e**) rest in a sealing manner against the inner wall of a sleeve-shaped inner wall of the housing, either directly or by means of circumferential seals, and wherein ducts, which are located in the housing and which connect the grooves (**7a-7e**) to the working spaces of a piston/cylinder unit (**A, B**), a reservoir (**R**) or a pump (**P**) respectively, terminate in the region of said grooves (**7a-7e**); and
that ducts which extend, in particular, radially and which extend, starting from the grooves (**7a-7e**) in the valve bush (**6**), to the inner wall (**6a**) of said valve bush (**6**) and pass through the latter, are disposed in said valve bush (**6**); and
**characterised in that**
the valve-rotating slide (**5**) has, on its outer side, a number of radially circumferential grooves (**5a-5d**) which are spaced apart from one another by means of circumferential walls (**5e-5g**), wherein said walls (**5e-5g**) rest against the inner wall (**6a**) of the valve bush (**6**); and
that there is disposed, in at least one wall (**5f**) of the valve-rotating slide (**5**), at least one groove (**NR_{A}, ND_{A}, NR_{B}, ND_{B}**) which extends in the axial direction and which extends out from a radially circumferential groove (**5b, 5c**) delimited by the wall (**5f**), wherein a duct (**R_{1A}, R_{2A}, R_{1B}, R_{2B}**) in the valve bush (**6**), which duct belongs to the groove (**NR_{A}, ND_{A}, NR_{B}, ND_{B}**), is closed by said wall (**5f**), or is connected to said groove (**NR_{A}, ND_{A}, NR_{B}, ND_{B}**) which extends in the axial direction, according to the position of the valve bush (**5**) and the valve-rotating slide (**6**) in relation to one another; and
that there is disposed, in at least one radially circumferential groove (**5b, 5c**) in the valve-rotating slide (**5**), an axial wall (**S_{A}, S_{B}**) which interrupts said circumferential groove (**5b, 5c**), wherein a duct (**P_{A}, P_{B}**) in the valve bush (**6**), which duct is associated with the wall (**S_{A}, S_{B}**), is closed by said axial wall (**S_{A}, S_{B}**), or is connected to the interrupted circumferential groove (**5b, 5c**), according to the position of the valve bush (**5**) and the valve-rotating slide (**6**) in relation to one another.

2. Rotary slide valve according to claim 1,
**characterised in that**,
in the central position defined by the torsion bar (**T**), the axial wall (**S_{A}, S_{B}**) closes a duct (**P_{A}, P_{B}**) in the valve bush (**6**) in relation to the circumferential groove (**5b, 5c**) in the valve-rotating slide (**5**) and, when deflection out of the central position occurs, opens a cross-section of opening between the groove (**5b, 5c**) and the duct (**P_{A}**, **P_{B}**), and thus brings about the sealing of said groove (**5b, 5c**) in relation to the pressure connection, particularly in the central position.

3. Rotary slide valve according to claim 1 or 2,
**characterised in that**
the valve bush (**6**) has five radially circumferential grooves (**7a-7e**), wherein the central groove (**7c**) is in communication with a valve inlet (**E_{R}**) via at least one duct, and that the two grooves (**7b, 7d**) immediately adjacent to the central groove (**7c**) are in communication with another valve inlet (**E_{P}**), and that the two outer grooves (**7a, 7f**) are in communication with a valve outlet (**A_{A}, A_{B}**) in each case.

4. Rotary slide valve according to claim 3,
**characterised in that**
the central groove (**7c**) in the valve bush (**6**) is connected to the valve inlet (**E_{R}**) which is connected to a reservoir (**R**), and that the other valve inlet (**E_{P}**) is connected to the pressure side of a pump (**P**).

5. Rotary slide valve according to one of claims 1 to 4,
**characterised in that**
the valve-rotating slide (**5**) has four radially circumferential grooves (**5a-5d**), wherein the outer two grooves (**5a, 5d**) in each case are spaced apart by means of a narrow wall (**5e, 5g**) and the two central grooves (**5b, 5c**) are spaced apart from one another by means of a wide wall (**5f**).

6. Rotary slide valve according to claim 5,
**characterised in that**
the two outer radially circumferential walls (**5e, 5g**) in each case have a breach (**5o, 5p**), particularly in the form of an axial groove, through which the radially circumferential grooves **(5a, 5b; 5c, 5d)** which are spaced apart by the wall **(5e, 5g)** are in communication with one another.

7. Rotary slide valve according to claim 5 or 6,
**characterised in that**
the central wall (**5f**) of the valve-rotating slide (**5**) has two groups of grooves (**NR_{A}, ND_{A}; NR_{B}, ND_{B}**) which extend in the axial direction, wherein each group comprises at least two grooves, and each group of grooves (**NR_{A}, ND_{A}; NR_{B}, ND_{B}**) starts out from one of the radially circumferential grooves (**5b, 5c**) adjoining the wall (**5f**) and all the grooves (**NR_{A}, ND_{A}; NR_{B}, ND_{B}**) extend at least as far as the region below the central groove (**7c**) of the valve bush (**6**), wherein each axial groove (**NR_{A}, ND_{A}; NR_{B}, ND_{B}**) forms a valve (**ND_{A}-R_{1A}; NR_{A}-R_{2A}; ND_{B}-R_{1B}; NR_{B}-R_{2B}**) with, in each case, a duct (**R_{1A}, R_{2A}; R_{1B}, R_{2B}**) which is associated with it, wherein the central groove (**7c**) of the valve bush (**6**) can be brought into communication with one or more axial grooves (**NR_{A}, ND_{A}; NR_{B}, ND_{B}**) via the ducts (**R_{1A}, R_{2A}; R_{1B}, R_{2B}**) in said valve bush (**6**) in dependence upon the position of said valve bush (**6**) and the valve-rotating slide (**5**) in relation to one another.

8. Rotary slide valve according to claim 7,
**characterised in that**
the each group of axial grooves (**NR_{A}, ND_{A}; NR_{B}, ND_{B}**) comprises precisely two grooves.

9. Rotary slide valve according to claim 7 or 8,
**characterised in that**
each group of axial grooves (**NR_{A}, ND_{A}; NR_{B}, ND_{B}**) has one groove with a small groove cross-section and one groove with a larger groove cross-section.

10. Rotary slide valve according to claim 9,
**characterised in that**
the groove (**NR_{A}; ND_{B}**) having the small groove cross-section forms, together with the wall (**5f**) and the appertaining duct **(R_{1A}; R_{1B})** in the valve bush (**6**), a throttle valve which connects the pressure side of the pump (**P**) to the reservoir (**R**) when deflection of the rotary slide valve (**1**) out of the central position occurs.

11. Rotary slide valve according to one of the preceding claims,
**characterised in that**
the valve-rotating slide (**5**) has four radially circumferential grooves (**5a-5d**), wherein the central grooves (**5b, 5c**) have at least one axial wall (**S_{A}, S_{B}**) which extends over the entire cross-section of each groove (**5b, 5c**).

12. Rotary slide valve according to one of the preceding claims,
**characterised in that**
those edges (**K**) of the axial grooves (**NR_{A}, ND_{A}; NR_{B}, ND_{B}**) which extend in the axial direction form control edges.

13. Rotary slide valve according to one of the preceding claims,
**characterised in that**
the valve-rotating slide (**5**) has four grooves (**NR_{A}, ND_{A}; NR_{B}, ND_{B}**) which extend axially at the periphery, and the valve bush (**6**) has five radially circumferential grooves (**7a-7e**), wherein the grooves are spaced apart from one another, in each case, by radially circumferential walls (**5e-5g and 7ₗ-7ₒ respectively**), and wherein the outer two grooves (**7a**, **7b, 7d, 7e**), in each case, of the valve bush (**6**) are disposed radially above the grooves (**5a, 5b, 5c, 5d**) in the valve-rotating slide (**5**), and that a wall (**5f**), which extends axially over the region of the central groove (**7c**) in the valve bush (**6**), is disposed between the two central grooves **5b, 5c**) in said valve-rotating slide (**5**).

14. Rotary slide valve according to one of the preceding claims,
**characterised in that**
said rotary slide valve (**1**) is a valve with a "closed centre" wherein, in the central position defined by the torsion bar (**T**):
a) the two axial walls (**S_{A}, S_{B}**) of the two central grooves (**5b, 5c**) in the valve-rotating slide (**5**) close the ducts (**P_{A}, P_{B}**) in the valve bush (**6**) which are connected to the pump (**P**) via the grooves (**7b, 7d**) in said valve bush (**6**); and
b) two axial grooves (**NR_{A}, NR_{B}**), in each case, overlap with the associated ducts (**R_{2A}, R_{2B}**) in the valve bush (**6**) in such a way that both the valve outlets (**A_{A}, A_{B}**) are connected to the reservoir (**R**) by the ducts (**R_{2A}, R_{2B}**) and the axial grooves (**NR_{A}, NR_{B}**);
and that, when deflection out of the defined central position occurs:
c) one of the two axial walls (**S_{A}, S_{B}**) continues to close the associated duct (**P_{A}, P_{B}**) in the valve bush (**6**) and the other axial wall (**S_{A}, S_{B}**) unblocks the duct (**P_{A}, P_{B}**) associated with it, in such a way that the groove (**5b, 5c**) which is interrupted by the axial wall (**S_{A}, S_{B}**) is connected to the duct (**P_{A}, P_{B}**), and that
d) a valve (**ND_{A}-R_{1A}; ND_{B}-R_{1B}**) formed by another axial groove (**ND_{A}, ND_{B}**) and an associated duct (**R_{1A}, R_{1B}**) in the valve bush (**6**) opens and additionally connects that groove (**5b, 5c**) which is interrupted by the axial wall (**S_{A}, S_{B}**) and is connected to the pump (**P**), to the reservoir (**R**) via the other axial groove (**ND_{A}, ND_{B}**).

15. Rotary slide valve according to one of the preceding claims,
**characterised in that**
at least one duct (**R_{1A}, R_{2A}; R_{1B}, R_{2B}, P_{A}, P_{B}**) in the valve bush (**6**) has a cross-section of opening which differs from a circular shape.

16. Rotary slide valve according to one of the preceding claims,
**characterised in that**
the cross-sectional shape of at least one duct (**R_{1A}, R_{2A}; R_{1B}, R_{2B}, P_{A}, P_{B}**) in the valve bush (**6**) is adapted to the required cross-section of opening when corresponding deflection occurs between the valve-rotating slide (**5**) and the valve bush (**6**) for the relevant valve of the rotary slide valve (**1**).

17. Rotary slide valve according to one of the preceding claims,
**characterised in that**
the quantity of through-flow can be predetermined in dependence upon the angle of twisting between the valve bush (**6**) and the valve-rotating slide (**5**) by means of the cross-section of opening of a duct (**R_{1A}, R_{2A}; R_{1B}, R_{2B}, P_{A}, P_{B}**) in said valve bush (**6**).

18. Rotary slide valve according to one of the preceding claims,
**characterised in that**
the grooves in the valve bush and in the valve-rotating slide are disposed one above the other in the radial direction.

19. Rotary slide valve according to one of the preceding claims,
**characterised in that**
the axial wall (**S_{A}, S_{B}**) forms a control edge with one of its edges (**Kₛ**).

20. Rotary slide valve according to one of the preceding claims,
**characterised in that**
the radially circumferential grooves are annular grooves.

21. Rotary slide valve according to one of claims 1 to 19,
**characterised in that**
the radially circumferential grooves extend over only part of the periphery and are delimited in the peripheral direction by at least one axial wall.

22. Rotary slide valve according to one of claims 1 to 19,
**characterised in that**
the radially circumferential grooves are interrupted or divided up in the peripheral direction by at least one axial wall.

## Revendications

1. Vanne à tiroir rotatif (1) pour une direction assistée hydraulique pour véhicules automobiles, comprenant :
une douille de vanne (6) de forme tubulaire, qui est reliée à au moins une roue directrice d'un véhicule automobile,
un tiroir rotatif cylindrique de vanne (5) à l'intérieur de la douille de vanne (6), qui est relié à un volant (L) du véhicule automobile et capable de tourner par rapport à la douille de vanne depuis une position médiane,
des trajets d'écoulement de fluide, qui relient une entrée côté pression (E_{P}) au choix avec l'une de deux sorties de vannes (A_{A}, A_{B}),
une barre de torsion (T), qui est agencée dans le tiroir rotatif de vanne (5),
dans laquelle la douille de vanne (6) présente sur sa face extérieure plusieurs gorges périphériques radiales (7a-7e), lesquelles sont écartées les unes des autres au moyen de barrettes périphériques (7ₗ-7ₒ), et les gorges (7a-7e) sont appliquées soit directement soit au moyen de joints périphériques contre la face intérieure d'une paroi intérieure de boîtier en forme de manchon, et dans la zone des gorges (7a-7e) se terminent des canaux ménagés dans le boîtier, lesquels relient les gorges (7a-7e) aux chambres de travail d'une unité à piston-et-cylindre (A, B), à un réservoir (R) ou respectivement à une pompe (P), et
dans la douille de vanne (7) sont ménagés des canaux, qui s'étendent en particulier radialement et qui, partant des gorges (7a-7e) de la douille de vanne (6), s'étendent jusqu'à la paroi intérieure (6a) de la douille de vanne (6) et traversent celle-ci, et
**caractérisée en ce que**
le tiroir rotatif de vanne (5) possède sur sa face extérieure plusieurs gorges périphériques radiales (5a-5d), lesquelles sont écartées les unes des autres au moyen de barrettes (5e-5g), lesdites barrettes (5e-5g) étant appliquées contre la paroi intérieure (6a) de la douille de vanne (6), et
**en ce que** dans au moins une barrette (5f) du tiroir rotatif de vanne (5) est ménagée au moins une gorge qui s'étend en direction axiale (NR_{A}, ND_{A}, NR_{B}, ND_{B}) qui s'étend depuis une gorge (5b, 5c) périphérique radiale délimitée par une barrette (5f), de sorte que selon la position de la douille de vanne (5) et du tiroir rotatif de vanne (6) l'un par rapport à l'autre, un canal (R_{1A}, R_{2A}, R_{1B}, R_{2B}), associé à la gorge (NR_{A}, ND_{A}, NR_{B}, ND_{B}), de la douille de vanne (6) est obturé par la barrette (5f) ou est relié à la gorge (NR_{A}, ND_{A}, NR_{B}, ND_{B}) qui s'étend en direction axiale, et
**en ce que** dans au moins une gorge radiale (5b, 5c) du tiroir rotatif de vanne (5) est agencée une barrette axiale (S_{A}, S_{B}) qui interrompt la gorge périphérique (5b, 5c), et de sorte que selon la position de la douille de vanne (5) et du tiroir rotatif de vanne (6) l'un par rapport à l'autre, un canal (P_{A}, P_{B}), associé à la barrette (S_{A}, S_{B}) de la douille de vanne (6) est obturé par la barrette axiale (S_{A}, S_{B}) ou est relié à la gorge périphérique interrompue (5b, 5c).

2. Vanne à tiroir rotatif selon la revendication 1, **caractérisée en ce que** la barrette axiale (S_{A}, S_{B}), dans la position médiane définie par la barre de torsion (T), obture un canal (P_{A}, P_{B}) de la douille de vanne (6) par rapport à la gorge périphérique (5b, 5c) du tiroir rotatif de vanne (5), et lors d'une déviation depuis la position médiane, celle-ci ouvre une section d'ouverture entre la gorge (5b, 5c) et le canal (P_{A}, P_{B}), et entraîne, en particulier dans la position médiane, l'étanchement de la gorge (5b, 5c) vis-à-vis du raccord de pression.

3. Vanne à tiroir rotatif selon la revendication 1 ou 2, **caractérisée en ce que** la douille de vanne (6) possède cinq gorges périphériques radiales (7a-7e), dans lesquelles la gorge médiane (7c) communique avec une entrée de vanne (E_{R}) via au moins un canal, et **en ce que** les deux gorges (7b, 7d) immédiatement voisines de la gorge médiane (7c) communiquent avec une autre entrée de vanne (E_{P}), et **en ce que** les deux gorges extérieures (7a, 7f) communiquent chacune avec une sortie de vanne (A_{A}, A_{B}).

4. Vanne à tiroir rotatif selon la revendication 3, **caractérisée en ce que** la gorge médiane (7c) de la douille de vanne (6) est relié à l'entrée de vanne (E_{R}) qui est reliée à un réservoir (R), et **en ce que** l'autre entrée de vanne (E_{P}) est reliée au côté refoulement d'une pompe (P).

5. Vanne à tiroir rotatif selon l'une des revendications 1 à 4, **caractérisée en ce que** le tiroir rotatif (5) possède quatre gorges périphériques radiales (5a-5d), dans lesquelles les deux gorges extérieures respectives (5a, 5d) sont écartées l'une de l'autre au moyen d'une barrette étroite (5e, 5g), et les deux gorges médianes (5b, 5c) sont écartées l'une de l'autre au moyen d'une barrette large (5f).

6. Vanne à tiroir rotatif selon la revendication 5, **caractérisée en ce que** les deux barrettes périphériques radiales extérieures respectives (5e, 5g) présentent une traversée (5o, 5p), en particulier sous la forme d'une gorge axiale, au moyen de laquelle les gorges périphériques radiales (5a, 5b ; 5c, 5d) écartées par la barrette (5e, 5g) communiquent l'une avec l'autre.

7. Vanne à tiroir rotatif selon la revendication 5 ou 6, **caractérisée en ce que** la barrette médiane (5f) du tiroir rotatif (5) présente deux groupes de gorges (NR_{A}, ND_{A}; NR_{B}, ND_{B}) qui s'étendent en direction axiale, chaque groupe comprenant au moins deux gorges, et chaque groupe de gorges (NR_{A}, ND_{A} ; NR_{B}, ND_{B}) part de l'une des gorges périphériques radiales (5b, 5c) adjacentes à la barrette (5f), et toutes les gorges (NR_{A}, ND_{A} ; NR_{B}, ND_{B}) s'étendent au moins jusque dans la zone au-dessous de la gorge médiane (7c) de la douille de vanne (6), chaque gorge axiale (NR_{A}, ND_{A} ; NR_{B}, ND_{B}) formant une vanne respective (ND_{A}-R_{1A}, NR_{A}-R_{2A} ; ND_{B}-R_{1B}, NR_{B}-R_{2B}), conjointement avec le canal (R_{1A}, R_{2A}, R_{1B}, R_{2B}) qui lui est associé dans la douille de vanne (6), la gorge médiane (7c) de la douille de vanne (6) pouvant être amené en communication avec une ou plusieurs gorges axiales (NR_{A}, ND_{A} ; NR_{B}, ND_{B}) en fonction de la position de la douille de vanne (6) et du tiroir rotatif (5) l'un par rapport à l'autre via les canaux (R_{1A}, R_{2A}, R_{1B}, R_{2B}) de la douille de vanne (6).

8. Vanne à tiroir rotatif selon la revendication 7, **caractérisée en ce que** chaque groupe de gorges axiales (NR_{A}, ND_{A}; NR_{B}, ND_{B}) comprend exactement deux gorges.

9. Vanne à tiroir rotatif selon la revendication 7 ou 8, **caractérisée en ce que** chaque groupe de gorges axiales (NR_{A}, ND_{A} ; NR_{B}, ND_{B}) comprend une gorge à petite section et une gorge à grande section.

10. Vanne à tiroir rotatif selon la revendication 9, **caractérisée en ce que** la gorge (ND_{A} ; ND_{B}) présentant la petite section forme, conjointement avec la barrette (5f) et le canal associé (R_{1A} ; R_{1B}) de la douille de vanne (6), une vanne à étranglement qui relie le côté refoulement de la pompe (P) au réservoir (R) lors d'une déviation de la vanne à tiroir rotatif (1) hors de la position médiane.

11. Vanne à tiroir rotatif selon l'une des revendications précédentes, **caractérisée en ce que** le tiroir rotatif (5) possède quatre gorges périphériques radiales (5a-5d), les gorges médianes (5b, 5c) présentant au moins une barrette axiale (S_{A}, S_{B}) qui s'étend sur la totalité de la section de chaque gorge (5b, 5c).

12. Vanne à tiroir rotatif selon l'une des revendications précédentes, **caractérisée en ce que** les arêtes (K) des gorges axiales (NR_{A}, ND_{A} ; NR_{B}, ND_{B}) qui s'étendent en direction axiale forment des arêtes de commande.

13. Vanne à tiroir rotatif selon l'une des revendications précédentes, **caractérisée en ce que** le tiroir rotatif (5) comporte quatre gorges (NR_{A}, ND_{A} ; NR_{B}, ND_{B}) qui s'étendent axialement à la périphérie et la douille de vanne (6) comporte cinq gorges périphériques radiales (7a-7e), lesdites gorges étant respectivement écartées par des barrettes périphériques radiales (5e-5g, respectivement 7ₗ-7ₒ), les deux gorges respectivement extérieures (7a, 7b, 7d, 7e) de la douille de vanne (6) étant agencées radialement au-dessus des gorges (5a, 5b, 5c, 5d) du tiroir rotatif (5), et **en ce que**, entre les deux gorges médianes (5b, 5c) du tiroir rotatif (5), est agencée une barrette (5f) qui s'étend axialement au-dessus de la zone de la gorge médiane (7c) de la douille de vanne (6).

14. Vanne à tiroir rotatif selon l'une des revendications précédentes, **caractérisée en ce que** la vanne à tiroir rotatif (1) est une vanne à "centre fermé", de sorte que dans la position médiane définie par la barre de torsion (T) :
a) les deux barrettes axiales (S_{A}, S_{B}) des deux gorges médianes (5b, 5c) du tiroir rotatif (5) obturent les canaux (P_{A}, P_{B}), de la douille de vanne (6), qui sont reliés à la pompe (P) via les gorges (7b, 7d) de la douille de vanne (6), et
b) deux gorges axiales respectives (NR_{A}, NR_{B}) avec les canaux associés (R_{2A}, R_{2B}) de la douille de vanne (6) se chevauchent de telle façon que les deux sorties de vanne (A_{A}, A_{B}) sont reliées au réservoir (R) via les canaux (R_{2A}, R_{2B}) et les gorges axiales (NR_{A}, NR_{B}),
et en cas de déviation depuis la position médiane définie :
c) l'une des deux barrettes axiales (S_{A}, S_{B}) obture toujours le canal associé (P_{A}, P_{B}) de la douille de vanne (6), et l'autre barrette axiale (S_{A}, S_{B}) libère le canal (P_{A}, P_{B}) qui lui est associé de telle façon que la gorge (5b, 5c) interrompue par la barrette axiale (S_{A}, S_{B}) est relié au canal (P_{A}, P_{B}), et **en ce que**
d) une vanne (ND_{A}-R_{1A} ; ND_{B}, R_{1B}) formée par une autre gorge axiale (ND_{A}, ND_{B}) et un canal associé (R_{1A}, R_{1B}) de la douille de vanne (6) souverain et celle des gorges (5b, 5c), interrompue par la barrette axiale (S_{A}, S_{B}), qui est reliée à la pompe (P), est additionnellement reliée au réservoir (R) via l'autre gorge axiale (ND_{A}, ND_{B}).

15. Vanne à tiroir rotatif selon l'une des revendications précédentes, **caractérisée** à en ce qu'au moins un canal (R_{1A}, R_{2A;} R_{1B}, R_{2B} ; P_{A}, P_{B}) de la douille de vanne (6) présente une section d'ouverture qui diffère d'une forme circulaire.

16. Vanne à tiroir rotatif selon l'une des revendications précédentes, **caractérisée en ce que** la forme de section transversale d'au moins un canal (R_{1A}, R_{2A}; R_{1B}, R_{2B}; P_{A}, P_{B}) de la douille de vanne (6) est adaptée à la section d'ouverture nécessaire lors d'une déviation correspondante entre le tiroir rotatif (5) et la douille de vanne (6) pour la vanne respective de la vanne à tiroir rotatif (1).

17. Vanne à tiroir rotatif selon l'une des revendications précédentes, **caractérisée en ce que**, au moyen de la section d'ouverture d'un canal (R_{1A}, R_{2A}; R_{1B}, R_{2B}; P_{A}, P_{B}) de la douille de vanne (6), il est possible d'imposer le débit quantitatif en fonction de l'angle de rotation entre la douille de vanne (5) et le tiroir rotatif (6).

18. Vanne à tiroir rotatif selon l'une des revendications précédentes, **caractérisée en ce que** les gorges de la douille de vanne et du tiroir de vanne sont agencées les unes au-dessus des autres en direction radiale.

19. Vanne à tiroir rotatif selon l'une des revendications précédentes, **caractérisée en ce que** la barrette axiale (S_{A}, S_{B}) forme une arête de commande au moyen de l'une de ses arêtes (K_{S}).

20. Vanne à tiroir rotatif selon l'une des revendications précédentes, **caractérisée en ce que** les gorges périphériques radiales sont des gorges annulaires.

21. Vanne à tiroir rotatif selon l'une des revendications 1 à 19, **caractérisée en ce que** les gorges périphériques radiales s'étendent uniquement sur une partie de la périphérie et sont limitées en direction périphérique par au moins une barrette axiale.

22. Vanne à tiroir rotatif selon l'une des revendications 1 à 19, **caractérisée en ce que** les gorges périphériques radiales sont interrompues ou subdivisées en direction périphérique par au moins une barrette axiale.
